# EUROPÄISCHE PATENTSCHRIFT

(11) **EP 3 953 528 B1**
(45) Veröffentlichungstag und Bekanntmachung des Hinweises auf die Patenterteilung: **15.06.2022**
(21) Anmeldenummer: 20713534.4
(22) Anmeldetag: 13.03.2020
(51) Int. Cl.: E02B 9/00, F03B 3/18, F03B 15/18

(54) **WASSERKRAFTANLAGE**
HYDROELECTRIC POWER PLANT
CENTRALE HYDROÉLECTRIQUE

(30) Priorität: 08.04.2019 DE 102019109118; 06.12.2019 DE 102019133291
(43) Veröffentlichungstag der Anmeldung: 16.02.2022
(73) Patentinhaber: Voith Patent GmbH, 89522 Heidenheim (DE)
(72) Erfinder: SCHABASSER, Martin, 3123 Pfaffing (AT)
(74) Vertreter: Voith Patent GmbH - Patentabteilung
(86) Internationale Anmeldenummer: PCT/EP2020/056856
(87) Internationale Veröffentlichungsnummer: WO 2020/207701

(56) Entgegenhaltungen:
- DE-B- 1 065 339
- DE-B3-102017 116 968
- DE-B3-102017 122 541
- US-A- 3 329 399

## Beschreibung

Die Erfindung betrifft eine Wasserkraftanlage mit wenigstens einem elektrischen Antriebssystem, wobei die Wasserkraftanlage ein Schließorgan umfasst, und das elektrische Antriebssystem zur Betätigung des Schließorgans verwendet wird. Bei dem Schließorgan kann es sich beispielsweise um einen Leitapparat oder um ein Ventil zum Unterbrechen des Wasserflusses durch die Wasserkraftanlage handeln (Einlaufventil).

In der Regel werden zur Betätigung des Schließorgans von Wasserkraftanlagen Antriebssysteme mit ölhydraulischen Servomotoren in Form von Hydraulikzylindern verwendet. Im Schadensfall ergibt sich dadurch das Risiko der Verschmutzung des Gewässers durch das Hydrauliköl. Zur Lösung dieses Problems wurden im Stand der Technik elektrisch betriebene Servomotoren vorgeschlagen.

Die WO 2016/145541 A1 offenbart beispielsweise eine Wasserkraftanlage mit elektrischen Servomotoren zum Bewegen der Leitschaufeln eines Leitapparats. Die DE 10 2017 116 968 B3 offenbart eine Wasserkraftanlage mit einem elektrischen Antrieb zur Betätigung des Einlaufventils.

Wasserkraftanlagen müssen hohe Sicherheitsstandards erfüllen, da bei einem technischen Versagen hohe Sachschäden entstehen und Menschen gefährdet werden können. So kann beispielsweise bei einem zu raschen Schließen der Schließorgane die Druckrohrleitung des Wasserkraftwerks bersten und so ganze Landstriche unter Wasser setzen. Zur Vermeidung solcher Schäden müssen insbesondere die jeweils vorgesehenen Schließzeiten bzw. die maximal zulässigen Schließgeschwindigkeiten eingehalten werden. Dabei können situationsbezogen unterschiedliche maximale Schließgeschwindigkeiten vorgeschrieben sein. Außerdem muss das Sicherheitssystem der Wasserkraftanlage sicherstellen können, dass die Schließgesetze auch beim Ausfall von einzelnen Komponenten noch eingehalten werden können (Fehlertoleranz).

Der Erfinder hat sich die Aufgabe gestellt, eine Wasserkraftanlage mit einem elektrischen Antriebssystem zur Betätigung eines Schließorgans anzugeben, das komplexe Schließgesetze zuverlässig einhalten kann.

Die gestellte Aufgabe wird durch eine Wasserkraftanlage mit den Merkmalen des unabhängigen Anspruchs gelöst. Vorteilhafte Ausführungsformen ergeben sich aus den davon abhängigen Unteransprüchen.

Die erfindungsgemäße Lösung wird nachfolgend anhand von Figuren erläutert. Darin ist im Einzelnen folgendes dargestellt:
- Figur 1: Gattungsgemäße Wasserkraftanlage;
- Figur 2: Elektrisches Antriebssystem zum Betätigen des Schließorgans einer erfindungsgemäßen Wasserkraftanlage.

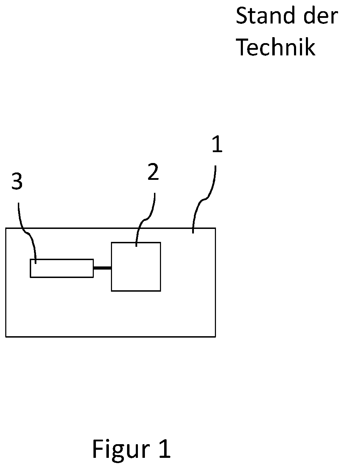

Figur 1 zeigt in sehr schematischer Darstellung eine gattungsgemäße Wasserkraftanlage gemäß dem Stand der Technik. Dabei ist die Wasserkraftanlage mit 1 bezeichnet. Die Wasserkraftanlage 1 umfasst ein Schließorgan, welches mit 2 bezeichnet ist, und einen elektrischen Antrieb bzw. Antriebssystem, welches mit 3 bezeichnet ist. Der elektrische Antrieb ist so mit dem Schließorgan 2 verbunden, dass er dasselbe betätigen kann. Das Schließorgan 2 kann z.B. ein Einlaufventil sein, welches durch den elektrischen Antrieb geöffnet und geschlossen wird. Oder das Schließorgan 2 ist ein Leitapparat, wobei der elektrische Antrieb 3 den Leitapparat betätigt. In diesem Fall muss der elektrische Antrieb 3 den Leitappart definiert in vorgegebene Positionen bringen. Sicherheitsrelevant ist in allen Fällen das Anfahren der Geschlossen-Stellung des Schließorgans 2, damit das Wasserkraftwerk zuverlässig stillgesetzt werden kann.

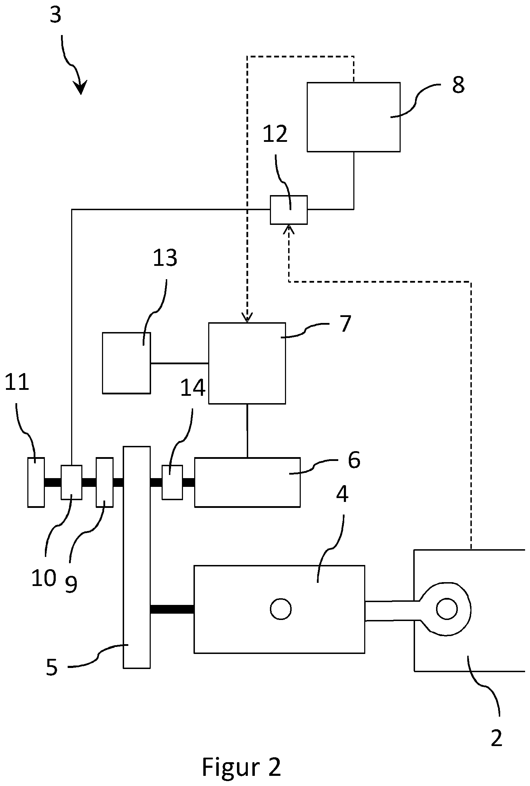

Figur 2 zeigt ein elektrisches Antriebssystem zum Betätigen eines Schließorgans einer erfindungsgemäßen Wasserkraftanlage, wobei das Schließorgan wiederum mit 2 bezeichnet ist. Das elektrische Antriebssystem ist wiederum mit 3 bezeichnet. Das elektrische Antriebssystem 3 umfasst eine Gewindespindel, welche mit 4 bezeichnet ist. Zum Betätigen des Schließorgans 2 ist die Gewindespindel 4 mit dem Schließorgan 2 verbunden. In Figur 2 sind durch die beiden kleinen Kreise die Angriffspunkte der Gewindespindel 4 angedeutet. Mit einem der Angriffspunkte wird die Gewindespindel 4 abgestützt, z.B. am einem Gehäuse oder Fundament, und mit dem anderen Angriffspunkt greift die Gewindespindel 4 am Schließorgan 2 an. Das elektrische Antriebssystem 3 umfasst ferner ein Getriebe, welches mit der Gewindespindel 4 verbunden und mit 5 bezeichnet ist. Das elektrische Antriebssystem 3 umfasst ferner einen elektrischen Motor, welcher mit 6 bezeichnet ist. Dabei ist die Antriebswelle des Motors 6 so mit dem Getriebe 5 verbunden, dass der Motor 6 die Gewindespindel 4 über das Getriebe 5 antreiben kann. Dabei definieren Gewindespindel 4, Getriebe 5 und Motor 6 einen Antriebsstrang. Der Motor 6 ist mit einem Umrichter verbunden, welcher den Motor 6 speist und mit 7 bezeichnet ist. Der Umrichter 7 ermöglicht einen Betrieb des Motors 6 mit variabler Drehzahl. Das Antriebssystem 3 umfasst ferner eine Steuereinheit zum Steuern des Antriebssystems 3, welche mit 8 bezeichnet ist. Dabei steuert die Steuereinheit 8 primär den Umrichter 7, wobei die Drehgeschwindigkeit des Motors 6 durch die Frequenz des Umrichters 7 bestimmt wird. Diese Regelbeziehung ist durch den gestrichelten Pfeil zwischen Steuereinheit 8 und Umrichter 7 angedeutet. Im Normalbetrieb legt die Steuereinheit 8 auf diese Weise die Stellgeschwindigkeit des Antriebssystems 3 fest. Das betrifft insbesondere auch die Schließgeschwindigkeit des Schließorgans, welche in der Regel bestimmte vordefinierte Werte auf keinen Fall überschreiten darf. Damit dies auch bei einer Fehlfunktion der Steuereinheit 8 bzw. des Umrichters 7 gewährleistet werden kann, umfasst das Antriebssystem 3 eine erste Bremse, welche so angeordnet ist, dass sie in den Antriebsstrang des Antriebssystems 3 drehzahlbegrenzend eingreifen kann. In Figur 2 ist die erste Bremse mit 9 bezeichnet. Bevorzugt greift die erste Bremse 9 motorseitig des Getriebes 5 in den Antriebsstrang ein, da dort die Drehmomente geringer sind als zwischen Getriebe 5 und der Gewindespindel 4. Die erste Bremse 9 ist vorzugsweise eine mechanische Bremse, und besonders bevorzugt als Fliehkraftbremse ausgebildet. Eine Fliehkraftbremse hat den Vorteil, dass unterhalb der Ansprechdrehzahl kein Bremsmoment erzeugt wird. In Figur 2 sitzt die erste Bremse 9 auf der Antriebswelle des Motors 6, welche durch das Getriebe 5 hindurchgeführt ist, d.h. die Bremse 9 ist vom Motor 6 aus gesehen jenseits des Getriebes 5 angeordnet. Die Bremse 9 könnte jedoch genauso gut diesseits desselben auf der Antriebswelle des Motors 6 angeordnet sein.

In der Regel erfolgt das Schließen eines Schließorgans in einer Wasserkraftanlage einem gestuften Schließgesetz. D.h. ausgehend von der Geöffnet-Stellung erfolgt das Schließen in einer ersten Phase mit einer ersten maximalen Schließgeschwindigkeit, und bei Erreichen eines definierten Schließgrades, d.h. bei Erreichen einer vordefinierten Position des Schließorgans, in einer zweiten Phase mit einer zweiten maximalen Schließgeschwindigkeit, wobei typischerweise die erste maximale Schließgeschwindigkeit größer als die zweite maximale Schließgeschwindigkeit ist. D.h. in der Regel muss die Schlussphase des Schließens sozusagen behutsamer als die Anfangsphase desselben erfolgen, wobei es auch in seltenen Fällen gerade umgekehrt ist.

Zur Absicherung der zweiten maximalen Schließgeschwindigkeit umfasst das Antriebssystem 3 eine zweite Bremse, welche mit 11 bezeichnet ist, und eine Aktivierungseinrichtung, welche mit 10 bezeichnet ist. Dabei kann die zweite Bremse 11 mit Hilfe der Aktivierungseinrichtung 10 aktiviert und deaktiviert werden. Dabei kann die Bremse 11 im deaktivierten Zustand in keinem Fall drehzahlbegrenzend in den Antriebsstrang eingreifen, während sie im aktivierten Zustand dazu in der Lage ist. Allerdings kann es sein, dass auch im aktivierten Zustand die Bremse 11 nicht in jedem Fall in den Antriebsstrang hemmend eingreift, sondern es kann dazu erforderlich sein, dass weitere Bedingungen erfüllt sein müssen. Das ist z.B. dann der Fall, wenn die Bremse 11 als Fliehkraftbremse ausgeführt wird, da eine solche Bremse nur dann hemmend wirkt, wenn eine vordefinierte Drehzahl überschritten wird. Ist die Bremse 11 als mechanische Bremse ausgeführt, zu denen auch Fliehkraftbremsen gehören, dann kann die Aktivierungseinrichtung 10 als mechanische Kupplung ausgeführt sein. Es sind jedoch auch andere Ausführungsformen denkbar. So kann die Bremse 11 beispielsweise auch eine Bremsscheibe und Bremsbacken umfassen und die Aktivierungseinrichtung 10 ist dann ein Mechanismus zum Anpressen der Bremsbacken an die Bremsscheibe. Die Bremsen 9 und 11 können auch integral ausgeführt sein. Beispielsweise, wenn sich die beiden Bremsen eine einzige Bremsscheibe teilen und dabei nur separate Bremsbacken umfassen. Im Grunde könnten sich die beiden Bremsen sogar die Bremsbacken teilen, und die Aktivierungseinrichtung 10 sorgt dann lediglich dafür, dass im aktivierten Zustand die Bremsbacken kräftiger an die Bremsscheibe gepresst werden. Die Bremse 11 kann beispielsweise als Wirbelstrombremse ausgeführt sein, wobei die Aktivierungseinrichtung dann als elektrische Schaltung ausgeführt wäre. Eine solche elektrische Bremse hat jedoch den Nachteil, dass die Funktion bei einem Stromausfall nicht mehr gewährleistet wäre. Dieser Nachteil kann jedoch dadurch umgangen werden, dass die verwendete Wirbelstrombremse die Bremswirkung mit Hilfe von Permanentmagneten erzielt. Von allen angeführten Ausführungsformen ist die Kombination von Fliehkraftbremsen mit einer mechanischen Kupplung die vorteilhafteste, da zur Realisierung derselben bewährte Standardkomponenten verwendet werden können.

In jedem Fall wird die Drehzahlbegrenzung bei deaktivierte zweiter Bremse 11 allein von der ersten Bremse 9 bestimmt, während sie bei aktivierter zweiter Bremse 11 durch die Kombination der Wirkungen von beiden Bremsen bestimmt wird.

Bezüglich dem Ort, an welchem die zweite Bremse 11 im Antriebsstrang angeordnet ist, gilt das zur ersten Bremse 9 Gesagte.

Die Aktivierungseinrichtung 10 ist so ausgeführt, dass die zweite Bremse deaktiviert ist, wenn ein elektrisches Steuersignal an der Aktivierungseinrichtung 10 anliegt, und aktiviert ist, wenn kein elektrisches Steuersignal an der Aktivierungseinrichtung 10 anliegt. Zur Versorgung der Aktivierungseinrichtung 10 mit dem elektrischen Steuersignal ist eine elektrische Leitung vorgesehen, welche mit der Aktivierungseinrichtung 10 verbunden ist. In Figur 2 ist die Anordnung für den Fall dargestellt, dass die Aktivierungseinrichtung 10 als mechanische Kupplung ausgeführt ist, so dass im aktivierten Zustand die zweite Bremse 11 in den Antriebsstrang eingekuppelt und im deaktivierten Zustand vom Antriebsstrang abgekuppelt ist. In diesem Fall kann der aktivierte Zustand, d.h. wenn kein elektrisches Steuersignal anliegt, durch eine Feder bewirkt werden, welche die Kupplung 10 einkuppelt, während das elektrische Steuersignal einen Mechanismus auslöst, welcher die Kupplung 10 auskuppelt, z.B. indem es einen Elektromagnet magnetisiert.

Es ist noch zu erwähnen, dass wenn die beiden Bremsen als Fliehkraftbremsen ausgeführt werden, dann wirken die beiden Bremsen in Kombination, d.h. bei aktivierter zweite Bremse folgendermaßen: Im Grunde wirkt nur diejenige Bremse, die die Drehzahl auf den niedrigeren Wert begrenzt. Daher müssen die Bremsen so ausgelegt werden, dass dies die zweite Bremse 11 ist, so dass bei deaktivierter zweiter Bremse 11 die Drehzahlbegrenzung auf einem höheren Wert erfolgt (nur die erste Bremse 9 wirkt) und bei aktivierter zweiter Bremse 11 die Drehzahlbegrenzung auf einen niedrigeren Wert erfolgt (nur die zweite Bremse 11 wirkt).

Außerdem verläuft in Figur 2 die elektrische Leitung zwischen der Steuereinheit 8 und der Aktivierungseinrichtung 10, d.h. das Steuersignal wird direkt von der Steuereinheit 8 bereitgestellt. Dies könnte jedoch auch anders bewerkstelligt werden, z.B. über eine separate Stromquelle, welche von der Steuereinheit 8 angesteuert wird. Zur Realisierung bzw. Absicherung des zweistufigen Schließgesetzes kann eine Unterbrechereinheit 12 in der elektrischen Leitung angeordnet sein, welche das elektrische Steuersignal für die Aktivierungseinrichtung 10 bereitstellt. Im einfachsten Fall ist die Unterbrechereinheit 12 ein Schalter, welcher in der ersten Phase des Schließens geschlossen ist und in der zweiten Phase geöffnet wird. D.h. die Unterbrechereinheit 12 wird in Abhängigkeit der Position des Schließorgans 2 aktiviert bzw. deaktiviert. Diese Beziehung ist in Figur 2 durch den gestrichelten Pfeil zwischen Schließorgan 2 und Unterbrechereinheit 12 angedeutet. Die beschriebene Aktivierung bzw. Deaktivierung der Unterbrechereinheit 12 in Abhängigkeit von der Position des Schließorgans 2 kann beispielsweise mechanisch mit Hilfe einer sogenannten Kulisse, welche am Schließorgan 2 befestigt ist, erfolgen. Es sind jedoch auch andere Realisierungen der beschriebenen Funktionalität denkbar. So könnte die Steuereinheit die Position des Schließorgans messen und entsprechend diesen Messwerten ein Steuersignal bereitstellen oder nicht. Genauso gut könnte dazu eine zweite separate Steuereinheit vorgesehen sein. In jedem Fall umfasst das Antriebssystem 3 Mittel zur Bereitstellung des elektrischen Steuersignals für die Aktivierungseinrichtung 10 in Abhängigkeit von der Position des Schließorgans 2.

Die beschriebene Anordnung hat zur Folge, dass bei einem Stromausfall die Aktivierungseinrichtung 10 die zweite Bremse 11 aktiviert, da dann kein elektrisches Steuersignal bereitgestellt wird, so dass das Schließen in diesem Fall in vollem Umfang mit der niedrigeren maximalen Schließgeschwindigkeit erfolgt. Natürlich vorausgesetzt, dass das Schließorgan 2 stromlos schließen kann. Dazu sind zwei Voraussetzungen notwendig: Die Gewindespindel 4 darf keine Selbsthemmung aufweisen und die Schließenergie des Schließorgans 2 muss auch bei einem Stromausfall bereitgestellt werden können. Die zweite Voraussetzung kann in mehrfacher Weise gegeben sein. So haben viele Schließorgane in Wasserkraftanlagen eine hydraulische Schließtendenz. Einlassventile verfügen meist über ein Schließgewicht, so dass die Schließenergie durch die Lageenergie des Gewichtes bereitgestellt werden kann.

Optional kann das Antriebssystem 3 noch ein Batteriesystem umfassen. In Figur 2 ist ein solches mit 13 bezeichnet und mit dem Umrichter 7 verbunden, so dass das Batteriesystem 13 den Umrichter 7 bei einem Stromausfall mit elektrischer Energie versorgen kann. Viele Wasserkraftanlagen umfassen ohnehin ein Batteriesystem zur Notstromversorgung, welches hierzu verwendet werden kann. Es kann jedoch zu dem genannten Zweck auch ein separates Batteriesystem vorgesehen sein. Wenn ein Batteriesystem vorhanden ist, dann kann dasselbe auch dazu verwendet werden, bei einem Stromausfall das elektrische Steuersignal für die Aktivierungseinrichtung bereitzustellen, so dass auch bei einem Stromausfall das gestufte Schließgesetz eingehalten werden kann. Dieselbe positive Wirkung kann auch dadurch erzielt werden, dass die Betätigung der Aktivierungseinrichtung nicht elektrisch über ein Steuersignal, sondern rein mechanisch erfolgt. Dazu könnte beispielsweise ein Hebelmechanismus verwendet werden, der mittels entsprechender Stellbewegungen die Aktivierungseinrichtung betätigt. Geeignet wären auch Drahtzüge oder ein hydraulisches Leitungssystem. Da eine solche mechanische Betätigung der Aktivierungseinrichtung nicht ohne größerem Aufwand realisierbar ist, macht eine solche Ausführung nur bei kritischen Anlagen Sinn, welche in jedem Fall ein gestuftes Stellgesetz erfordern (z.B. bei Einlassventilen die als Kugelschieber ausgeführt sind).

In jedem Fall ist das erfindungsgemäße Antriebssystem so ausgeführt, dass die zweite Bremse mit Hilfe der Aktivierungseinrichtung in Abhängigkeit von der Position des Schließorgans aktiviert und deaktiviert werden kann. Dabei ist wie oben bereits erwähnt unter der Phrase "Position des Schließorgans" der Schließ- bzw. Öffnungsgrad desselben zu verstehen.

Bei einem Verfahren zum Betrieb einer erfindungsgemäßen Wasserkraftanlage würde demgemäß die zweite Bremse aktiviert werden, wenn beim Schließen des Schließorgans dasselbe eine vordefinierte Position überschreitet. Dies gilt für die meisten Fälle, in denen wie oben erwähnt, die Schlussphase des Schließvorgangs behutsamer erfolgen muss. Für den umgekehrten Fall würde die zweite Bremse deaktiviert werden, wenn beim Schließen des Schließorgans dasselbe eine vordefinierte Position überschreitet. Es ist klar, dass dabei die zweite Bremse zu Beginn des Schließvorgangs jeweils den entgegengesetzten Zustand einnimmt, d.h. sie ist natürlich zunächst deaktiviert, wenn sie später aktiviert wird.

Da der elektrische Motor 6 bei einer Drehzahl unter der Nenndrehzahl Momente erzeugen kann, welche über dem Nennmoment liegen, ist es von Vorteil, wenn im Antriebsstrang eine Überlastsicherung angeordnet ist, um die mechanischen Teile des Antriebssystems 3 vor Zerstörung zu schützen. Eine solche optionale Überlastsicherung ist in Figur 2 auf der Antriebswelle des Motors 6 angeordnet und mit 14 bezeichnet, d.h. die Überlastsicherung 14 ist zwischen Motor 6 und Getriebe 5 angeordnet. Die Überlastsicherung 14 ist vorzugsweise als Reibelement ausgeführt, sodass im angesprochenen Zustand weiterhin ein Moment übertragen wird, und sich die Getriebespindel nicht frei bewegen kann.

Abschließend sei erwähnt, dass Schließgesetze mit mehr als einer Stufe durch eine Kaskadierung der Kombination von Aktivierungseinrichtung und weiterer Bremse realisiert werden können. So kann beispielsweise ein zweistufiges Schließgesetz mit Hilfe einer dritten Bremse und einer zweiten Aktivierungseinrichtung für diese Bremse realisiert werden. Für die Verwendung von Fliehkraftbremsen gilt dabei natürlich das oben Gesagte in analoger Weise.

### Bezugszeichenliste

- 1: Wasserkraftanlage
- 2: Schließorgan
- 3: Elektrischer Antrieb
- 4: Gewindespindel
- 5: Getriebe
- 6: Elektromotor
- 7: Umrichter
- 8: Steuereinheit
- 9: Erste Bremse
- 10: Aktivierungseinrichtung bzw. Kupplung
- 11: Zweite Bremse
- 12: Unterbrechereinheit
- 13: Batteriesystem
- 14: Überlastsicherung

## Patentansprüche

1. Wasserkraftanlage (1) mit einem Schließorgan (2) und einem elektrischen Antriebssystem (3), welches mit dem Schließorgan (2) verbunden ist, wobei das Antriebssystem (3) eine Gewindespindel (4), ein Getriebe (5) und einen Elektromotor (6) umfasst, welche einen Antriebsstrang definieren, und wobei das Antriebssystem (3) ferner einen Umrichter (7) zur Speisung des Elektromotors (6), eine Steuereinheit (8) zum Steuern des Umrichters (7) und eine erste mechanische Bremse (9) umfasst, wobei die erste Bremse (9) so angeordnet ist, dass sie drehzahlbegrenzend in den Antriebsstrang eingreifen kann, **dadurch gekennzeichnet, dass** das Antriebssystem (3) eine zweite mechanische Bremse (11) und eine Aktivierungseinrichtung (10) umfasst, wobei die zweite Bremse (11) und die Aktivierungseinrichtung (10) so ausgebildet und angeordnet sind, dass die zweite Bremse (11) mit Hilfe der Aktivierungseinrichtung (10) in Abhängigkeit von der Position des Schließorgans (2) aktiviert und deaktiviert werden kann, und wobei die zweite Bremse (11) nur im aktivierten Zustand in den Antriebsstrang drehzahlbegrenzend eingreifen kann.

2. Wasserkraftanlage (1) nach Anspruch 1, wobei das Antriebssystem (3) Mittel (8, 12) zur Bereitstellung eines elektrischen Steuersignals in Abhängigkeit von der Position des Schließorgans (2) umfasst, und die Aktivierungseinrichtung (10) so ausgebildet ist, dass sie die zweite Bremse (11) deaktiviert, wenn ein elektrisches Steuersignal bereitgestellt wird, und aktiviert, wenn kein elektrisches Steuersignal bereitgestellt wird.

3. Wasserkraftanlage (1) nach Anspruch 2, wobei die Mittel zur Bereitstellung eines elektrischen Steuersignals eine elektrische Leitung, welche mit der Aktivierungseinrichtung (10) verbunden ist, und eine Unterbrechungseinheit (12), welche in der elektrischen Leitung angeordnet ist, umfasst, und wobei die Unterbrechungseinheit (12) so ausgebildet ist, dass sie in Abhängigkeit von der Position des Schließorgans (2) aktiviert und deaktiviert werden kann.

4. Wasserkraftanlage (1) nach Anspruch 3, wobei das Antriebssystem (3) eine Kulisse umfasst, welche so ausgebildet ist, dass sie die Unterbrechungseinheit (12) aktivieren und deaktivieren kann.

5. Wasserkraftanlage (1) nach Anspruch 2, wobei die Steuereinheit (8) so ausgebildet ist, dass sie die Position des Schließorgans (2) messen und aufgrund der Messwerte ein elektrisches Steuersignal bereitstellen kann.

6. Wasserkraftanlage (1) nach Anspruch 1, wobei die Betätigung der Aktivierungseinrichtung mechanisch erfolgt.

7. Wasserkraftanlage (1) nach einem der vorangehenden Ansprüche, wobei die Bremsen (9, 11) als Fliehkraftbremsen und die Aktivierungseinrichtung (10) als Kupplung ausgebildet sind.

8. Wasserkraftanlage (1) nach einem der vorangehenden Ansprüche, wobei die Bremsen (9, 11) so angeordnet sind, dass sie motorseitig des Getriebes in den Antriebstrang eingreifen können.

9. Wasserkraftanlage (1) nach einem der vorangehenden Ansprüche, wobei das Antriebssystem (3) ein Batteriesystem (13) zur Versorgung des Umrichters (7) mit elektrischer Energie umfasst.

10. Wasserkraftanlage (1) nach einem der vorangehenden Ansprüche, wobei das Antriebssystem (3) eine Überlastsicherung (14) umfasst, welche zwischen Motor (6) und Getriebe (5) angeordnet ist.

11. Wasserkraftanlage (1) nach Anspruch 10, wobei die Überlastsicherung (14) als Reibelement ausgeführt ist.

12. Wasserkraftanlage (1) nach einem der vorangehenden Ansprüche, wobei die Gewindespindel (4) keine Selbsthemmung aufweist.

13. Verfahren zum Betrieb einer Wasserkraftanlage (1) gemäß einem der vorangehenden Ansprüche, wobei die zweite Bremse (11) aktiviert oder deaktiviert wird, wenn beim Schließen des Schließorgans (2) dasselbe eine vordefinierte Position überschreitet.

## Claims

1. A hydroelectric power plant (1) comprising a closing member (2) and an electric drive system (3) connected to said closing member (2), wherein said drive system (3) comprises a threaded spindle (4), a gearbox (5) and an electric motor (6) which define a drive train, and wherein the drive system (3) further comprises an inverter (7) for feeding the electric motor (6), a control unit (8) for controlling the inverter (7), and a first mechanical brake (9), the first brake (9) being arranged that it can engage in the drive train in a speed-limiting manner, **characterized in that** the drive system (3) comprises a second mechanical brake (11) and an activation device (10), the second brake (11) and the activation device (10) being designed and arranged in such a way that the second brake (11) can be activated and deactivated by means of the activation device (10) as a function of the position of the closing member (2), and the second brake (11) being able to engage in the drive train in a speed-limiting manner only in the activated state.

2. A hydroelectric power plant (1) according to claim 1, wherein the drive system (3) comprises means (8, 12) for providing an electrical control signal depending on the position of the closing member (2), and the activating means (10) is adapted to deactivate the second brake (11) when an electrical control signal is provided and to activate it when no electrical control signal is provided.

3. A hydroelectric power plant (1) according to claim 2, wherein said means for providing an electric control signal comprises an electric line connected to said activating means (10) and an interrupting unit (12) arranged in said electric line, and wherein said interrupting unit (12) is adapted to be activated and deactivated depending on the position of said closing means (2).

4. A hydroelectric power plant (1) according to claim 3, wherein said drive system (3) comprises a gate adapted to activate and deactivate said interrupting unit (12).

5. Hydroelectric power plant (1) according to claim 2, wherein the control unit (8) is designed to measure the position of the closing member (2) and to provide an electrical control signal on the basis of the measured values.

6. Hydroelectric power plant (1) according to claim 1, wherein the activation device is actuated mechanically.

7. Hydroelectric power plant (1) according to one of the preceding claims, wherein the brakes (9, 11) are designed as centrifugal brakes and the activation device (10) is designed as a clutch.

8. Hydroelectric power plant (1) according to any of the preceding claims, wherein the brakes (9, 11) are arranged to engage the drive train on the engine side of the transmission.

9. Hydroelectric power plant (1) according to any one of the preceding claims, wherein the drive system (3) comprises a battery system (13) for supplying electrical energy to the converter (7).

10. Hydroelectric power plant (1) according to any one of the preceding claims, wherein the drive system (3) comprises an overload protection device (14) arranged between the motor (6) and the gearbox (5).

11. Hydroelectric power plant (1) according to claim 10, wherein the overload protection (14) is designed as a friction element.

12. Hydroelectric power plant (1) according to any of the preceding claims, wherein the threaded spindle (4) does not have self-locking.

13. A method of operating a hydroelectric power plant (1) according to any one of the preceding claims, wherein the second brake (11) is activated or deactivated when, during closing of the closing member (2), the same exceeds a predefined position.

## Revendications

1. Centrale hydroélectrique (1) comprenant un organe de fermeture (2) et un système d'entraînement électrique (3) qui est relié à l'organe de fermeture (2), le système d'entraînement (3) comprenant une broche filetée (4), un engrenage (5) et un moteur électrique (6), qui définissent une chaîne cinématique, et dans lequel le système d'entraînement (3) comprend en outre un convertisseur (7) pour alimenter le moteur électrique (6), une unité de commande (8) pour commander le convertisseur (7) et un premier frein mécanique (9), le premier frein (9) étant agencé de telle manière, qu'il peut intervenir dans la chaîne cinématique en limitant la vitesse de rotation, **caractérisé en ce que** le système d'entraînement (3) comprend un deuxième frein mécanique (11) et un dispositif d'activation (10), le deuxième frein (11) et le dispositif d'activation (10) étant conçus et disposés de telle sorte que le deuxième frein (11) peut être activé et désactivé à l'aide du dispositif d'activation (10) en fonction de la position de l'organe de fermeture (2), et le deuxième frein (11) ne pouvant intervenir dans la chaîne cinématique en limitant la vitesse de rotation que dans l'état activé.

2. Centrale hydroélectrique (1) selon la revendication 1, dans laquelle le système d'entra nement (3) comprend des moyens (8, 12) pour fournir un signal de commande électrique en fonction de la position de l'organe de fermeture (2), et le dispositif d'activation (10) est conçu pour désactiver le deuxième frein (11) lorsqu'un signal de commande électrique est fourni, et pour l'activer lorsqu'aucun signal de commande électrique n'est fourni.

3. Centrale hydroélectrique (1) selon la revendication 2, dans laquelle les moyens pour fournir un signal de commande électrique comprennent une ligne électrique qui est reliée au dispositif d'activation (10) et une unité d'interruption (12) qui est disposée dans la ligne électrique, et dans laquelle l'unité d'interruption (12) est conçue de telle sorte qu'elle peut être activée et désactivée en fonction de la position de l'organe de fermeture (2).

4. Centrale hydroélectrique (1) selon la revendication 3, dans laquelle le système d'entraînement (3) comprend une coulisse qui est conçue pour activer et désactiver l'unité d'interruption (12).

5. Centrale hydroélectrique (1) selon la revendication 2, dans laquelle l'unité de commande (8) est conçue de telle sorte qu'elle peut mesurer la position de l'organe de fermeture (2) et fournir un signal de commande électrique sur la base des valeurs mesurées.

6. Centrale hydroélectrique (1) selon la revendication 1, dans laquelle l'actionnement du dispositif d'activation est mécanique.

7. Centrale hydroélectrique (1) selon l'une des revendications précédentes, dans laquelle les freins (9, 11) sont des freins centrifuges et le dispositif d'activation (10) est un embrayage.

8. Centrale hydroélectrique (1) selon l'une des revendications précédentes, dans laquelle les freins (9, 11) sont disposés de manière à pouvoir s'engager dans la chaîne cinématique du côté du moteur de la boîte de vitesses.

9. Centrale hydroélectrique (1) selon l'une des revendications précédentes, dans laquelle le système d'entraînement (3) comprend un système de batterie (13) pour alimenter le convertisseur (7) en énergie électrique.

10. Centrale hydroélectrique (1) selon l'une des revendications précédentes, dans laquelle le système d'entraînement (3) comprend un dispositif de sécurité contre les surcharges (14) qui est disposé entre le moteur (6) et le réducteur (5).

11. Centrale hydroélectrique (1) selon la revendication 10, dans laquelle le dispositif de sécurité contre les surcharges (14) est réalisé sous la forme d'un élément de friction.

12. Centrale hydroélectrique (1) selon l'une des revendications précédentes, dans laquelle la tige filetée (4) ne présente pas d'autoblocage.

13. Procédé de fonctionnement d'une centrale hydroélectrique (1) selon l'une des revendications précédentes, dans lequel le deuxième frein (11) est activé ou désactivé lorsque, lors de la fermeture de l'organe de fermeture (2), celui-ci dépasse une position prédéfinie.
